# EUROPÄISCHE PATENTSCHRIFT

(11) **EP 1 274 785 B1**
(45) Veröffentlichungstag und Bekanntmachung des Hinweises auf die Patenterteilung: **21.09.2005**
(21) Anmeldenummer: 01919352.3
(22) Anmeldetag: 26.02.2001
(51) Int. Cl.: C08K 5/523, C08K 5/00, C08K 5/52, C08L 25/08

(54) **PERLPOLYMERISATE ENTHALTEND HALOGENFREIE PHOSPHORVERBINDUNGEN**
BEAD POLYMERIZATES CONTAINING HALOGEN-FREE PHOSPHORUS COMPOUNDS
COMPOSES PHOSPHORES, EXEMPTS D'HALOGENE, CONTENANT DES POLYMERES EN PERLES

(30) Priorität: 09.03.2000 DE 10011543
(43) Veröffentlichungstag der Anmeldung: 15.01.2003
(73) Patentinhaber: LANXESS Deutschland GmbH, 51369 Leverkusen (DE)
(72) Erfinder: PODSZUN, Wolfgang, 51061 Köln (DE); SEIDEL, Andreas, 41542 Dormagen (DE); ECKEL, Thomas, 41540 Dormagen (DE); WITTMANN, Dieter, 51375 Leverkusen (DE); KARLOU-EYRISCH, Kamelia, 40235 Düsseldorf (DE)
(86) Internationale Anmeldenummer: PCT/EP2001/002216
(87) Internationale Veröffentlichungsnummer: WO 2001/066636

(56) Entgegenhaltungen:
- DE-A- 19 648 799
- DE-A- 19 650 370
- GB-A- 966 260
- US-A- 4 677 173
- US-A- 4 980 382
- US-A- 5 658 974
- US-A- 5 686 514
- DATABASE WPI Section Ch, Week 199436 Derwent Publications Ltd., London, GB; Class A18, AN 1994-290923 XP002173857 & JP 06 220110 A (SEKISUI PLASTICS CO LTD) , 9. August 1994 (1994-08-09)
- DATABASE WPI Section Ch, Week 200039 Derwent Publications Ltd., London, GB; Class A14, AN 2000-446908 XP002173858 & JP 2000 159822 A (SUMITOMO CHEM CO LTD), 13. Juni 2000 (2000-06-13)

## Beschreibung

Die vorliegende Erfindung betrifft neue vernetzte Perlpolymerisate mit einer mittleren Teilchengröße von 1 bis 1000 µm enthaltend spezielle halogenfreie Phosphorverbindungen, ein Verfahren zur Herstellung dieser Perlpolymerisate und deren Venvendung als Flammschutzmittel in Thermoplasten.

Die Verwendung von Phosphorsäureestern, insbesondere aromatischen Phosphorsäureestern, wie z. B. Triphenylphosphat, zur Flammschutzausrüstung von Thermoplasten ist lange bekannt. In US-A 5 061 745 werden beispielsweise Polymermischungen aus aromatischem Polycarbonat, ABS-Pfropfpolymerisat und/oder styrolhaltigem Copolymer und Monophosphorsäureestern als Flammschutzadditiv beschrieben. Die Wärmeformbeständigkeit solcher Formmassen ist für manche Anwendung jedoch nicht ausreichend. Des weiteren besitzen diese Verbindungen eine für viele Anwendungen unzureichende Schwerflüchtigkeit sowie eine Fähigkeit zur Migration in der Polymerzusammensetzung, wodurch es unter ungünstigen Verarbeitungsbedingungen beim Spritzguss zu Problemen durch Ausbluten des Flammschutzadditivs und zur Ausbildung von unerwünschten Verschmutzungen der Spritzgusswerkzeugoberflächen kommen kann.

Aus US-A 5 733 957 sind spezielle mehrkernige Phosphorsäureester zur Flammschutzausrüstung bekannt. Bei diesen Verbindungen ist die Migrationsfähigkeit des Phosphorsäureesters zwar deutlich reduziert, doch zeigen diese Verbindungen nach wie vor einen sehr großen Weichmachereffekt.

Gleiches gilt für oligomere Phosphorsäureester, deren Anwendung als Flammschutzmittel z.B. in EP-A 0 363 608 und EP-A 0 640 655 beschrieben wird.

In der JP 52004545 A werden Mikrokapseln aus Polyvinylchlorid, Polyethylen oder Nylon beschrieben, die eine Röhren-, Kugel- oder Pelletform aufweisen und z.B. Triphenylphospat als Flammschutzmittel enthalten können. Diese Mikrokapseln können zur Flammschutzausrüstung von verschäumten Polyurethanen eingesetzt werden. Für den Flammschutz technisch wichtiger Thermoplaste, insbesondere solcher mit einer hohen Verarbeitungstemperatur, wie z.B. Polycarbonat, Polyester (z.B. PET/PBT), Polyamid und Polyphenylenoxid/-sulfid, bringen diese Mikrokapseln jedoch keinen Vorteil gegenüber dem freien Flammschutzmittel, da das Kapselmaterial unter den Verarbeitungsbedingungen solcher Thermoplaste erweicht oder sogar aufschmilzt und das Flammschutzmittel somit bereits bei der Verarbeitung und nicht erst im Brandfall freigegeben wird.

Gleiches gilt für die Mikrokapseln, die in JP 750 16825 beschrieben werden. Hier werden Flammschutzmittel wie z.B. Trikresylphosphat oder Tributylphosphat von einer Hülle aus bei hohen Temperaturen instabilen Materialien wie z.B. Gelatine umschlossen.

Flammschutzmittel-enthaltende Mikrokapseln, die bei den Verarbeitungstemperaturen gängiger Thermoplaste thermisch stabil sind, sind ebenfalls bekannt. So werden in DE-A 3 543 414 Mikrokapseln beschrieben, die eine Mischung aus einem halogenierten organischen Flammschutzmittel und einem anorganischen Oxid, Hydroxid, Borat oder Phosphat enthalten und zur Flammschutzausrüstung einer Vielzahl typischer Thermoplaste eingesetzt werden kann. Allerdings sind halogenhaltige Flammschutzmittel aus ökologischer und toxikologischer Sicht bedenklich. Mikrokapseln mit halogenfreien Flammschutzmitteln, insbesondere halogenfreien Phosphorsäureestern werden in der Anmeldung nicht offenbart.

Gleiches gilt für die Anmeldung JP 5512 2075, in welcher Mikrokapseln mit halogenhaltigen Flammschutzmitteln auf Basis eines thermoplastischen Polymers aus olefinisch ungesättigten Monomereinheiten beschrieben werden. Diese Kapseln können zur Flammschutzausrüstung von Textilien eingesetzt werden.

Es wurden nun Perlpolymerisate enthaltend spezielle halogenfreie Phosphorverbindungen gefunden, die universell zur Flammschutzausrüstung von Thermoplasten geeignet sind, insbesondere auch solcher, die aufgrund ihrer Schmelz- oder Glasübergangstemperatur nur bei hohen Temperaturen verarbeitet werden können. Durch Einsatz der erfindungsgemäßen Perlpolymerisate an Stelle der freien, unverkapselten Phosphorverbindungen wird das Ausbluten und Ausdampfen des FR-Additivs reduziert sowie die Wärmeformbeständigkeit des flammwidrig ausgerüsteten Thermoplasten erhöht und die Effizienz des Flammschutzmittels erhöht.

Gegenstand der Erfindung sind somit neue, vernetzte Perlpolymerisate aus olefinisch ungesättigten Verbindungen mit einer mittleren Perlengröße von 1 bis 1000, bevorzugt 2 bis 500, insbesondere 5 bis 100 µm, wobei diese Perlpolymerisate Triphenylphosphat als halogenfreie Phosphorverbindungen enthalten.

Bevorzugt sind o.g. Perlpolymerisate aus
A) Copolymerisat aus
   a) 70 bis 99,7 Gew.-% mindestens einer monoolefinisch ungesättigten Verbindung
   b) 0,3 bis 30 Gew.-% mindestens einer polyolefinisch ungesättigten Verbindung,
   und
B) mindestens einer halogenfreien Phosphorverbindung, wobei der Gehalt an Phosphorverbindung 5 bis 95, bevorzugt 20 bis 95, insbesondere 30 bis 95 Gew.-% bezogen auf das Perlpolymerisat beträgt.

Weiterhin wurde gefunden, dass sich die o.g. erfindungsgemäßen Perlpolymerisate herstellen lassen, indem man
I) eine organische Phase aus 5 bis 95, bevorzugt 5 bis 80, insbesondere 5 bis 70 Gew.-% eines Monomeren-Gemisches aus
   a) 70 bis 99,7 Gew.-% einer oder mehrerer monoolefinisch ungesättigten Verbindungen
   b) 0,3 bis 30 Gew.-% einer oder mehrerer polyolefinisch ungesättigten Verbindungen
      und
      5 bis 95, bevorzugt 20 bis 95, insbesondere 30 bis 95 Gew.-% an mindestens einer halogenfreien Phosphorverbindung,
      - mindestens einem Initiator, und
      - gegebenenfalls einem oder mehreren mit Wasser wenig oder nicht mischbaren organischen
II) in einer wässrigen Phase aus
   - Wasser,
   - mindestens einem Dispergiermittel,
   - und gegebenenfalls einem Saatpolymer
   unter Rühren bei Temperaturen zwischen 0°C und 60°C fein verteilt,
III) dann unter Temperaturerhöhung und unter Rühren polymerisiert und
IV) danach gegebenenfalls enthaltene flüchtige, organische Substanzen abtrennt und das entstandene Perlpolymerisat isoliert, wäscht und trocknet.

Als "erfindungsgemäße Perlpolymerisate" sind im Sinne der Erfindung Perlpolymerisate, die TPP als halogenfreie Phosphorverbindungen enthalten, zu verstehen.

Die Verwendung der erfindungsgemäßen Perlpolymerisate als Flammschutzmittel für Thermoplaste, insbesondere auch solcher mit hoher Verarbeitungstemperatur, ist ein weiterer Gegenstand der vorliegenden Erfindung.

Es ist als äußerst überraschend zu bezeichnen, dass die erfindungsgemäßen Perlpolymerisate besser zur Flammschutzausrüstung von Thermoplasten geeignet sind als die freien, d.h. unverkapselten Phosphorverbindungen. Die erfindungsgemäßen Perlpolymerisate sind in den wichtigen Kunststoffen leicht einarbeitbar und mit diesen gut verträglich. Das Migrationsverhalten und der Weichmachereffekt der Phosphorverbindung ist bei Einsatz in der mikroverkapselten Form deutlich reduziert.

Die erfindungsgemäßen Perlpolymerisate sind kugelförmige Partikel und bestehen aus einer Polymermatrix und darin eingelagerten halogenfreien Phosphorverbindungen.

Die mittlere Teilchengröße der Perlpolymerisate bestimmt durch Ausmessen und Auszählen mittels eines Lichtmikroskops beträgt 1 bis 1000, bevorzugt 2 bis 500, insbesondere 5 bis 100 µm. Die Art und Breite der Teilchengrößenverteilung schränkt die Einsetzbarkeit der Perlpolymerisate als Flammschutzmittel nicht ein.

Die Polymermatrix ist ein vernetztes Polymerisat aus polymerisierbaren olefinisch ungesättigten Verbindungen.

Vorzugsweise ist die Polymermatrix ein Copolymerisat aus polymerisierbaren monoolefinisch ungesättigten Verbindungen und polymerisierbaren polyolefinisch ungesättigten Verbindungen als Vernetzer.

Erfindungsgemäß geeignete monoolefinisch ungesättigte Verbindungen sind z.B. Vinylaromaten wie Styrol, alpha-Methylstyrol, Vinyltoluol, Vinylpyridin, Acryl- und Methacrylverbindungen, C₁-C₈-Alkylacrylate, C₁-C₈-Alkylmethacrylate, beispielsweise und bevorzugt Acrylsäure, Methacrylsäure, Acrylamid, Methacrylamid, Acrylnitril, Methylmethacrylat, Ethylacrylat, Hydroxyethylmethacrylat, n-Butylacrylat, n-Butylmethacrylat, iso-Butylacrylat, isoButylmethacrylat, n-Hexylacrylat, n-Hexylmethacrylat, Ethylhexylacrylat, Ethylhexylmethacrylat, n-Octylacrylat, n-Octylmethacrylat, Decylacrylat, Decylmethacrylat, Dodecylacrylat, Dodecylmethacrylat, Stearylacrylat, Stearylmethacrylat, Cyclohexylacrylat, Cyclohexylmethacrylat, 4-tert.-Butylcyclohexylmethacrylat, Benzylacrylat, Benzylmethacrylat, Phenylethylacrylat, Phenylethylmethacrylat, Phenylpropylacrylat, Phenylpropylmethacrylat, Phenylnonylacrylat, Phenylnonylmethacrylat, 3-Methoxybutylacrylat, 3-Methoxybutylmethacrylat, Butoxyethylacrylat, Butoxyethylmethacrylat, Diethylenglykolmonoacrylat, Diethylenglykolmonomethacrylat, Triethylenglykolmonoacrylat, Triethylenglykolmonomethacrylat, Tetraethylenglykolmonoacrylat, Tetraethylenglykolmonomethacrylat, Furfurylacrylat, Furfurylmethacrylat, Tetrahydrofurfurylacrylat oder Tetrahydrofurfurylmethacrylat oder Mischungen hieraus. Weiterhin geeignet sind Vinylpyrrolidon, Vinylchlorid, Vinylidenchlorid, Vinylacetat, Vinylpropionat, Vinyllaurat oder Vinyladipat Mischungen hieraus.

Besonders bevorzugt sind Mischungen, die Styrol oder Styrol und Acrylnitril enthalten.

Polyolefinisch ungesättigten Verbindungen im Sinne der Erfindung sind olefinisch ungesättigte Verbindungen mit mehr als einer polymerisierbaren olefinisch ungesättigten Gruppe im Molekül. Die polyolefinisch ungesättigten Verbindungen wirken als Vernetzer. Beispielhaft und bevorzugt seien genannt: Allylmethacrylat, Ethylenglykoldimethacrylat, Ethylenglykoldiacrylat, Butandioldiacrylat, Butandioldimethacrylat, Hexandioldimethacrylat, Triethylenglykoldimethacrylat, Tetraethylenglykoldimethacrylat, Trimethylolpropantriacrylat, Pentaerythritol-tetramethacrylat, Triallylisocyanurat und Divinylbenzol oder Mischungen hieraus.

Divinylbenzol ist besonders bevorzugt.

In der Polymermatrix kann der Anteil an Vernetzer innerhalb eines bestimmten Bereiches variiert werden. Der Gehalt an Vernetzer liegt im allgemeinen zwischen 0,3 und 30 Gew.-%, vorzugsweise zwischen 0,5 und 15 Gew.-%, besonders bevorzugt zwischen 1 und 10 Gew.-%.

Den polymerisierbaren olefinisch ungesättigten Verbindungen können auch in Mengen bis zu 30 Gew.-% bezogen auf diese Verbindungen Polymere, vorzugsweise in diesen Verbindungen lösliche Polymere zugesetzt werden. Geeignete Polymere sind z.B. Polymethylmethacrylat, Polystyrol, SAN-Copolymerisate oder Acrylat-Copolymerisate.

Die erfindungsgemäß geeignete halogenfreie Phosphorverbindung ist Triphenylphosphat.

Die Herstellung der erfindungsgemäßen Perlpolymerisate erfolgt nach der Verfahrensweise der Suspensionspolymerisation.

Unter dem Begriff Suspensionspolymerisation wird ein Verfahren verstanden, bei dem ein Monomer oder ein monomerhaltiges Gemisch, das einen im Monomer oder Monomerengemisch löslichen Initiator enthält, in einer mit dem Monomer oder dem Monomerengemisch im wesentlichen nicht mischbaren Phase, die ein Dispergiermittel enthält, in Form von Tröpfchen, gegebenenfalls im Gemisch mit Zusatzstoffen, zerteilt wird und durch Temperaturerhöhung unter Rühren ausgehärtet wird. Weitere Einzelheiten der Suspensionspolymerisation werden beispielsweise in H. Greens "Polymerization Processes", in: Ullmanns Encyclopedia of Industrial Chemistry, Bd. A21, 5. Aufl. (B. Elvers, S. Hawkins, G. Schulz, Hrsg.), VCH, Weinheim 1992, S. 363-373 beschrieben.

Insbesondere können die erfindungsgemäßen Perlpolymerisate hergestellt werden, indem man eine organische Phase enthaltend die oben genannten polymerisierbaren olefinisch ungesättigten Verbindungen, die oben beschriebene halogenfreie Phosphorverbindung, mindestens einen Initiator, und gegebenenfalls ein mit Wasser wenig mischbaren organischen Lösungsmittel in einer wässrigen Phase aus Wasser und mindestens einem Dispergiermittel unter Rühren bei Temperaturen zwischen 0°C und 60°C fein verteilt, dann unter Temperaturerhöhung und unter Rühren polymerisiert und danach gegebenenfalls enthaltene flüchtige, organische Substanzen abtrennt und das entstandene Perlpolymerisat isoliert und gegebenenfalls wäscht und trocknet.

Die bei der Durchführung des erfindungsgemäßen Verfahrens als Ausgangsmaterialien benötigten olefinisch ungesättigten Verbindungen sind einschließlich der Vernetzer bereits oben ausführlich beschrieben worden.

Als Initiatoren können bei der Durchführung des erfindungsgemäßen Verfahrens alle üblicherweise für die Einleitung von Polymerisationen verwendbaren Substanzen eingesetzt werden. Vorzugsweise in Betracht kommen öllösliche Initiatoren. Beispielhaft genannt seien Peroxyverbindungen, wie Dibenzoylperoxid, Dilaurylperoxid, Bis(p-chlorbenzoylperoxid), Dicyclohexylperoxidicarbonat, tert.-Butylperoctoat, 2,5-Bis-(2-ethylhexanoylperoxi)-2,5-dimethylhexan und tert.-Amylperoxi-2-ethylhexan, des weiteren Azoverbindungen, wie 2,2'-Azobis(isobutyronitril) und 2,2'-Azobis(2-methylisobutyronitril).

Als Dispergiermittel kommen alle üblicherweise für diesen Zweck eingesetzten Substanzen in Betracht. Vorzugsweise genannt seien natürliche und synthetische wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Polymethacrylsäure und Copolymerisate aus (Meth)acrylsäure und (Meth)acrylsäureestem, und außerdem auch mit Alkalimetallhydroxid neutralisierte Copolymerisate aus Methacrylsäure und Methacrylsäureester. Zur Einstellung des pH-Wertes der wässrigen Phase können übliche Pufferreagenzien eingesetzt werden.

Bei der Durchführung des erfindungsgemäßen Verfahrens geht man im allgemeinen so vor, dass man zunächst eine Mischung aus den olefinisch ungesättigten Verbindungen und der halogenfreien Phosphorverbindung herstellt. Diese Mischung ist im Allgemeinen einphasig.

Es ist möglich und in vielen Fällen vorteilhaft, bei der Herstellung der Mischung ein Hilfslösemittel zu verwenden. Auf diese Weise kann die Viskosität der Mischung erniedrigt und die Löslichkeit der Phosphorverbindung erhöht werden. Geeignete Hilfslösungsmittel sind organische Lösungsmittel, die mit Wasser wenig mischbar sind. Als Beispiele seien genannt aromatische Kohlenwasserstoffe, wie Toluol und Xylol, weiterhin halogenierte Kohlenwasserstoffe, wie Tetrachlormethan, Chloroform, Methylenchlorid und Dichlorethan, und außerdem auch Ester, wie Ethylacetat.

Die Mengenverhältnisse an den eingesetzten Komponenten können bei der Durchführung des erfindungsgemäßen Verfahrens innerhalb eines größeren Bereiches variiert werden.

Initiatoren werden im allgemeinen in Mengen zwischen 0,05 und 2,5 Gew.%, vorzugsweise zwischen 0,2 und 1,5 Gew.-%, bezogen auf die Monomerenmischung, eingesetzt.

Die Menge an Hilfslösungsmittel kann bis zu 300 Gew.-%, bezogen auf die olefinisch ungesättigten Verbindungen, betragen.

Die Menge an wässriger Phase beträgt im allgemeinen zwischen 75 und 1200 Gew.-%, vorzugsweise zwischen 100 und 500Gew.-%, bezogen auf die olefinisch ungesättigten Verbindungen.

Die Menge an Dispergiermittel beträgt im allgemeinen zwischen 0,05 und 2 Gew.-%, vorzugsweise zwischen 0,1 und 1 Gew.-%, bezogen auf die wässrige Phase.

Im ersten Schritt des erfindungsgemäßen Verfahrens wird die organische Phase unter Rühren in die wässrige Phase gegeben. Die Temperatur kann dabei innerhalb eines bestimmten Bereiches variiert werden. Im allgemeinen arbeitet man bei Temperaturen zwischen 0°C und 60°C, vorzugsweise zwischen 10°C und 50°C.

Im zweiten Schritt des erfindungsgemäßen Verfahrens erfolgt die Polymerisation. Dabei ist die Rührgeschwindigkeit wichtig für die Einstellung der Teilchengröße. So nimmt die mittlere Teilchengröße der Perlpolymerisate mit zunehmender Rührdrehzahl ab. Die exakte Rührdrehzahl zur Einstellung einer bestimmten vorgegebenen Perlgröße hängt im Einzelfall stark von der Reaktorgröße, der Reaktorgeometrie und der Rührergeometrie ab.

Die Polymerisationstemperatur kann innerhalb eines größeren Bereiches variiert werden. Sie hängt von der Zerfallstemperatur des eingesetzten Initiators ab. Im allgemeinen arbeitet man bei Temperaturen zwischen 50°C und 150°C, vorzugsweise zwischen 55°C und 100°C.

Die Dauer der Polymerisation hängt von der Reaktivität der beteiligten Komponenten ab. Im allgemeinen dauert die Polymerisation zwischen 30 Minuten und mehreren Stunden. Es hat sich bewährt, ein Temperaturprogramm anzuwenden, bei dem die Polymerisation bei niedriger Temperatur, z.B. 70°C begonnen wird und mit fortschreitendem Polymerisationsumsatz die Reaktionstemperatur erhöht wird.

Die Aufarbeitung im letzten Schritt des erfindungsgemäßen Verfahrens erfolgt nach üblichen Methoden. So kann das Perlpolymerisat zum Beispiel durch Filtrieren oder Dekantieren isoliert und gegebenenfalls nach dem Waschen getrocknet werden. Eventuell enthaltenes Hilfslösungsmittel kann aus dem anfallenden Gemisch, gegebenenfalls zusammen mit einem Teil des Wassers, destillativ entfernt werden.

Die erfindungsgemäßen Perlpolymerisate eignen sich hervorragend zur Flammfestausrüstung von Kunststoffen bzw. von Blends aus zwei oder mehreren verschiedenen Kunststoffen, insbesondere auch solcher, die nur bei hohen Temperaturen (z.B. größer als 200°C) verarbeitet werden können.

Als Beispiele für thermoplastische Kunststoffe seien genannt Homo- und Copolymere von olefinisch ungesättigten Monomeren wie Polyfluorethylene, Polyethylen, Polypropylen, Ethylen/Propylen-Copolymere, Polystyrole, Styrol/Acrylnitril-Copolymere, kautschukhaltige (Vinyl-)Pfropfpolymerisate, z.B. ABS-Copolymere (Acrylnitril/Butadien/Styrol), Vinyl-Chlorid Homo- und Copolymere, Polyacrylate, wie z.B. Polymethylmethacrylat, Vinylacetat-Copolymere, Polyacetale, Polycarbonate, insbesondere z.B. Polycarbonate auf der Basis von Bisphenpol A und dessen -derivaten, Polyester, z.B. Polyalkylenterephthalate, als auch Polyestercarbonate, Polyamide, z.B. Nylon-6 oder Nylon-6.6, Polyesteramide, Polyphenylenoxide, Polyphenylensulfide, Polysulfone, Polyethersulfone oder Polyetherketone.

Genannt seien auch Mischungen aus mindestens zwei der zuvor genannten Kunststoffe (Polymer-Blends).

Grundsätzlich lassen sich alle thermoplastischen Kunststoffe einsetzen, unabhängig von ihrer chemischen und/oder physikalischen Natur und der Art ihrer Herstellung, z.B. über radikalisch, thermisch oder Redox-induzierte bzw. Säure- oder Base-katalysierte Lösungs-, Emulsions-, Suspensions- oder Massepolymerisation.

Besonders bevorzugt ist der Einsatz der erfindungsgemäßen Perlpolymerisate zur Flammschutzausrüstung solcher Thermoplaste oder Mischungen von Thermoplasten, die bei hohen Temperaturen verarbeitet werden. Beispielhaft genannt seien hier Formmassen enthaltend Polycarbonate, Polyester, Polyestercarbonate, Polyamide, Polyesteramide, Polyphenylenoxide, Polyphenylensulfide oder Mischungen hieraus. Insbesondere seien auch Blends genannt, die diese Thermoplaste neben anderen Komponenten, wie z.B. Schlagzähmodifikatoren und/oder Vinylpolymerisaten und/oder verträglichkeitsvermittelnden Substanzen enthalten.

Besonders bevorzugt sind Polycarbonat-Formmassen und deren schlagzähmodifizierte Blends.

Besonders bevorzugt sind Zusammensetzungen enthaltend
A) 40 bis 99, vorzugsweise 50 bis 98,5 Gew.-Teile aromatisches Polycarbonat und/oder Polyestercarbonat
B) 0,5 bis 60, vorzugsweise 1 bis 40, insbesondere 2 bis 25 Gew.-Teile Pfropfpolymerisat von
   B.1) 5 bis 95, vorzugsweise 30 bis 90 Gew.-% eines oder mehrerer Vinylmonomeren auf
   B.2) 95 bis 5, vorzugsweise 10 bis 70 Gew.% einer oder mehrerer Pfropfgrundlagen mit einer Glasumwandlungstemperatur <10°C, vorzugsweise <0°C, besonders bevorzugt < -20°C,
C) 0,1 bis 50 Gew.-Teile, vorzugsweise 1 bis 40 Gew.-Teile, besonders bevorzugt 2 bis 30 Gew.-Teile der o.g. Perlpolymerisate
D) 0 bis 30, vorzugsweise 0 bis 20, besonders bevorzugt 0 bis 15 Gew.-Teile mindestens eines thermoplastischen Polymers, ausgewählt aus der Gruppe der Vinyl(co)polymerisate und Polyalkylenterephthalate,
E) 0 bis 5 Gew.-Teile, vorzugsweise 0,1 bis 3 Gew.-Teile, besonders bevorzugt 0,1 bis 1 Gew.-Teile, ganz besonders bevorzugt 0,1 bis 0,5 Gew.-Teile eines fluorierten Polyolefins,
wobei die Summe der Gew.-Teile aller Komponenten 100 ergibt.

Erfindungsgemäß geeignete aromatische Polycarbonate, Polyestercarbonate und Schlagzähmodifikatoren sind beispielsweise in EP-A 640 655 (US-A 5 672 645) beschrieben.

Diphenole zur Herstellung der aromatischen Polycarbonate und/oder aromatischen Polyestercarbonate sind vorzugsweise solche der Formel (VIII) 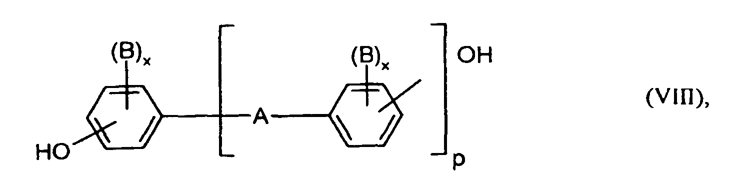 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (IX) oder (X) 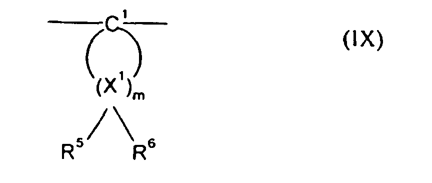 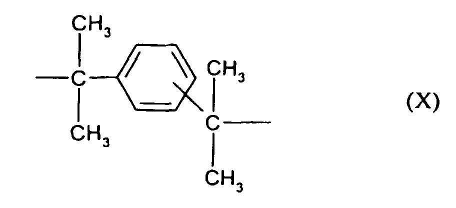
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆- Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich (vgl. EP-A 640 655).

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielseise US-Patent 3 419 634) bzw. nach literaturbekannten Verfahren herstellbar. Die Herstellung Polydiorganosiloxan-haltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

Als Pfropfpolymerisate sind ein oder mehrere Pfropfpolymerisate von
- B.1: 5 bis 95, vorzugsweise 30 bis 90 Gew.-%, wenigstens eines Vinylmonomeren auf
- B.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C,
geeignet.

Die Pfropfgrundlage B.2 hat im allgemeinen eine mittlere Teilchengröße (d₅₀-Wert) von 0,05 bis 5 µm, vorzugsweise 0,10 bis 2 µm, besonders bevorzugt 0,20 bis 1 µm,

Monomere B.1 sind vorzugsweise Gemische aus
- B.1.1: 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Beispiele für vernetzende Monomere sind in EP-A 640 655 genannt.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Fluorierte Polyolefine E wie sie erfindungsgemäß verwendet werden können sind in EP-A 640 655 beschrieben.

Das Einarbeiten des Flammschutzmittel-haltigen Perlpolymerisats in den Thermoplast kann in bekannter Weise erfolgen, indem es mit dem Polymer oder der Polymermischung bei Raumtemperatur oder bei erhöhter Temperatur vermischt und bei Temperaturen oberhalb der Schmelztemperatur der Polymere in üblichen Aggregaten wie z.B. Innenknetern, Extrudern oder Doppelwellenschnecken schmelzcompoundiert bzw. schmelzextrudiert wird.

Bei dieser Kompoundierung oder in einem weiteren Kompoundierschritt können der Formmasse auch übliche zusätzliche Additive wie z.B. Antitropfmittel, Gleit- und Entformungsmittel, Nukleiermittel, Antistatika, Stabilisatoren, Farbstoffe und Pigmente sowie Füll- und Verstärkungsstoffe zugefügt werden.

Die Erfindung wird durch die folgenden Beispiele veranschaulicht.

### Beispiele

### Beispiel 1

### Herstellung eines vernetzten SAN-Perlpolymerisates enthaltend Triphenylphosphat

52,88 g Styrol, 17,62 g Acrylnitril, 4,5 g Divinylbenzol, und 75 g Triphenylphospat werden zu einer homogenen Lösung gemischt und anschließend bei Raumtemperatur unter Rühren mit 0,75 g Dibenzoylperoxid versetzt. Man überführt die Lösung in einen Rührreaktor, der zuvor mit 0,3 Litern einer 1 gew.-%igen, wässrig-alkalischen, mit Natronlauge auf einen pH-Wert von 8 eingestellten Lösung eines Copolymerisates aus 50 Gew.-% Methacrylsäure und 50 Gew.-% Methylmethacrylat gefüllt wurde. Das Copolymerisat dient als Kolloidstabilisator. Bei einer Temperatur von 78°C wird 13 h mit einer Rührergeschwindigkeit von 600 U/min gerührt und anschließend der Reaktor auf Raumtemperatur abgekühlt. Die erhaltenen ausgehärteten Perlen werden abfiltriert, mit Wasser gewaschen und bei 50°C im Trockenschrank getrocknet. Es wurden 135 g eines transparenten Perlpolymeristes mit einer mittleren Teilchengröße von ca. 30 µm und einem Phosphorgehalt von 4,9 % (entspricht 51,6% TPP) erhalten. Eine thermogravimetrische Analyse (TGA) des Perlpolymerisats zeigt, dass eine Zersetzung der SAN-Phase erst bei Temperaturen zwischen 350 und 400°C einsetzt. Die TGA wurde an einer Probe von ca. 2,5 mg im Stickstoffstrom (50 ml/min) dynamisch mit einer Aufheizrate von 10 K/min gefahren.

### Beispiel 2

### Herstellung eines vernetzten Perlpolymerisates auf Basis Styrol, Acrylnitril und Ethylhexylacrylat enthaltend Triphenylphosphat

372 g Styrol, 144 g Acrylnitril, 24 g Ethylhexylacrylat, 60 g Divinylbenzol und 600 g Triphenylphospat werden zu einer homogenen Lösung gemischt und anschließend bei Raumtemperatur unter Rühren mit 6 g Dibenzoylperoxid versetzt. Man überführt die Lösung in einen Rührreaktor, der zuvor mit 2,4 Litern einer 1 gew.%igen, wässrig-alkalischen, mit Natronlauge auf einen pH-Wert von 8 eingestellten Lösung eines Copolymerisates aus 50 Gew.-% Methacrylsäure und 50 Gew.-% Methylmethacrylat gefüllt wurde. Das Copolymerisat dient als Kolloidstabilisator. Bei einer Temperatur von 78°C wird 16 h mit einer Rührergeschwindigkeit von 250 U/min gerührt und anschließend der Reaktor auf Raumtemperatur abgekühlt. Die erhaltenen ausgehärteten Perlen werden abfiltriert, mit Wasser gewaschen und bei 50°C im Trockenschrank getrocknet. Es wurden 1085 g eines transparenten Perlpolymeristes mit einer mittleren Teilchengröße von ca. 40 µm und einem Phosphorgehalt von 4,7 % (entspricht 49,5 % TPP) erhalten. Eine thermogravimetrische Analyse (TGA) des Perlpolymerisats zeigt, dass eine Zersetzung der SAN-Phase erst bei Temperaturen zwischen 350°C und 400°C einsetzt. Die TGA wurde an einer Probe von ca. 2,5 mg im Stickstoffstrom (50 ml/min) dynamisch mit einer Aufheizrate von 10 K/min gefahren.

### Beispiel 3

### Herstellung einer schlagzähmodifizierten Polycarbonatformmasse mit einem vernetzten Perlpolymerisat auf Basis Styrol und Acrylnitril enthaltend TPP

Folgende Komponenten wurden vermischt:
32,1 Gew.-Teile
   A1: Polycarbonat auf Basis Bisphenol A mit einer relativen Lösungsviskosität von 1,28, gemessen in Methylenchlorid bei 25°C und in einer Konzentration von 0,5 g/100 ml,
32,1 Gew.-Teile
   A2: Polycarbonat auf Basis Bisphenol A mit einer relativen Lösungsviskosität von 1,20, gemessen in Methylenchlorid bei 25°C und in einer Konzentration von 0,5 g/100 ml,
4,5 Gew.-Teile
   B: Pfropfpolymerisat, hergestellt durch Emulsionspolymerisation, von 45 Gew.-Teilen Styrol und Acrylnitril im Verhältnis von 72:28 auf 55 Gew.-Teilen eines teilchenförmigen vernetzten Polybutadienkautschuks (mittlerer Teilchendurchmesser d₅₀ = 0,3 bis 0,4 µm),
3,4 Gew.-Teile
   D: Styrol/Acrylnitril-Copolymerisat mit einem Styrol/Acrylnitril-Verhältnis von 72:28 und einer Grenzviskosität von 0,55 dl/g (Messung in Dimethylformamid bei 20°C),
4,2 Gew.-Teile
   E: Polytetrafluorethylenpräparat mit 10 Gew.-% PTFE und 90 Gew.-% Pfropfpolymerisat (B2), hergestellt durch saure Kofällung eines Gemisches von Emulsionen beider Komponenten,
   und
23,1 Gew.-Teile
   Cl: TPP-haltiges SAN-Perlpolymerisat gemäß Beispiel I.

Das Mischen der Komponenten erfolgt bei 200°C auf einem 0,05 I-Innenkneter.

Für die Messung der Vicat B 120-Temperaturen werden aus der granulierten Formmasse bei 220°C Pressplatten hergestellt, aus denen normgerechte Prüfkörper gesägt werden. Die Messung der Vicat-Temperatur erfolgt nach ISO 306.

Die Schmelzeviskosität wird bei 260°C und Scherraten von 100 bis 1500 s⁻¹ bestimmt.

Die Neigung des Flammschutzmittels zum Ausbluten oder Ausdampfen wird anhand der Ergebnisse einer TGA-Untersuchung beurteilt. Ca. 2,5 mg der wie oben beschrieben kompoundierten Formmasse werden im Stickstoffstrom (50 ml/min) dynamisch mit einer Rate von 10 K/min ausgehend von Raumtemperatur aufgeheizt. Der prozentuale Massenverlust, der bei einer erreichten Temperatur von 280°C (dies entspricht einer typischen Verarbeitungstemperatur für derartige PC/ABS-Formmassen) bestimmt wird, dient als Maß für die Ausblutneigung des FR-Additivs.

### Vergleichsbeispiel 1

### Herstellung einer schlagzähmodifizierten Polycarbonatformmasse mit freiem TPP

Folgende Komponenten wurden vermischt:
32,1 Gew.-Teile des Polycarbonats A1,
32,1 Gew.-Teile des Polycarbonats A2,
4,5 Gew.-Teile des Pfropfpolymerisat B,
14,6 Gew.-Teile des Styrol/Acrylnitril-Copolymerisats D,
4,2 Gew.-Teile des Polytetrafluorethylenpräparats E,
   und
11,9 Gew.-Teile
C2: Triphenylphosphat (Disflamoll TP, Bayer AG, Leverkusen, Deutschland).

Die Herstellung der Formmassen und Prüfkörper sowie deren Ausprüfung erfolgte wie unter Beispiel 3 beschrieben.

### Beispiel 4

### Herstellung einer schlagzähmodifizierten Polycarbonatformmasse mit einem vernetzten Perlpolymerisat auf Basis Styrol und Acrylnitril enthaltend TPP

Folgende Komponenten wurden vermischt:
32,1 Gew.-Teile des Polycarbonats A1,
32,1 Gew.-Teile des Polycarbonats A2,
4,5 Gew.-Teile des Pfropfpolymerisat B,
4,2 Gew.-Teile des Polytetrafluorethylenpräparats E,
0,4 Gew.-Teile eines Entformungsmittels,
0,1 Gew.-Teile eines Phosphitstabilisators,
25,1 Gew.-Teile
C3: TPP-haltiges SAN-Perlpolymerisat mit einem TPP-Gehalt von 47,4 Gew.-%, welches analog zu Beispiel 1, aber in einem um den Faktor 8 vergrößerten Ansatz hergestellt wurde,
   und
1,4 Gew.-Teile
C4: vernetztes, TPP-freies SAN-Perlpolymerisat, welches analog zu Beispiel I, aber unter Verzicht auf das Triphenylphosphat hergestellt wurde.

Das Mischen der Komponenten erfolgt auf einem 1,3 1-Innenkneter. Die Formkörper werden auf einer Spritzgießmaschine Typ Arburg 270E bei 240°C hergestellt.

Die Kerbschlagzähigkeit wird bei Raumtemperatur gemäß ISO 180-1A gemessen.

Die Messungen der Vicat B 120-Temperatur und der Schmelzeviskosität werden wie unter Beispiel 3 beschrieben durchgeführt.

Die Flammwidrigkeit wird gemäß UL94V bei 3,2 mm Wandstärke bestimmt.

Das Spannungsriss-(ESC-)Verhalten wird an Stäben der Abmessung 80 x 10 x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt und bei Zimmertemperatur 5 Minuten im Testmedium gelagert. Die Beurteilung des Spannungsrissverhaltens erfolgt über die relative Randfaserdehnung, die mindestens erforderlich ist, damit der Stab innerhalb der 5-minütigen Expositionszeit im Testmedium bricht.

### Vergleichsbeispiel 2

### Herstellung einer schlagzähmodifizierten Polycarbonatformmasse mit freiem TPP und vernetztem, TPP-freien SAN-Perlpolymerisat

Folgende Komponenten wurden vermischt:
32,1 Gew.-Teile des Polycarbonats A1,
32,1 Gew.-Teile des Polycarbonats A2,
4,5 Gew.-Teile des Pfropfpolymerisat B,
4,2 Gew.-Teile des Polytetrafluorethylenpräparats E,
0,4 Gew.-Teile eines Entformungsmittels,
0,1 Gew.-Teile eines Phosphitstabilisators,
14,6 Gew.-Teile des TPP-freien, vernetzten SAN-Perlpolymerisats C4,
   und
11,9 Gew.-Teile Triphenylphosphat C2.

Die Herstellung der Formmassen und Prüfkörper sowie deren Ausprüfung erfolgte wie unter Beispiel 4 beschrieben.

**Tabelle 1:**

| | Vergleich 1 | Beispiel 3 |
|---|---|---|
| Viskosität (260°C, 100 s⁻¹) [Pa s] | 223 | 384 |
| Viskosität (260°C, 1000 s⁻¹) [Pa s] | 100 | 173 |
| Viskosität (260°C, 1500 s⁻¹) [Pa s] | 88 | 136 |
| | | |
| Vicat B 120 [°C] | 86 | 91 |
| | | |
| TGA (Masseverlust bei 280°C) [%] | -3,76 | -3,34 |

**Tabelle 2:**

| | Vergleich 2 | Beispiel 4 |
|---|---|---|
| aₖ (23 °C) [kJ/m²] | 8 | 8 |
| | | |
| ESC (Randfaserdehnung bei Bruch) [%] | 1,0 | 1,4 |
| | | |
| Viskosität (260°C, 100 s⁻¹) [Pa s] | 242 | 318 |
| Viskosität (260°C, 1000 s⁻¹) [Pa s] | 126 | 158 |
| Viskosität (260°C, 1500 s⁻¹) [Pa s] | 109 | 133 |
| | | |
| Vicat B 120 [°C] | 86 | 88 |
| | | |
| UL94V bei 3,2 mm (Gesamtnachbrennzeit) | nicht bestanden | V0 (19 s) |

Die Beispiele 3 und 4 sowie die Vergleichsbeispiele 1 und 2 unterscheiden sich (bis auf die zugesetzten Additive) lediglich in der Art, in der das Flammschutzmittel Triphenylphosphat und das Styrol/Acrylnitril-Copolymerisat vorliegen. Alle Formmassen enthalten 11,9 Gew.-Teile TPP (Beispiele 3 und 4 in Form von vernetzten Perlpolymerisaten, Vergleichsbeispiele 1 und 2 in Form von freiem TPP) und 14,6 Gew.-Teile SAN-Copolymerisat (Vergleichsbeispiel 1 in Form von unvernetztem SAN, Beispiel 3 teils in Form von unvernetztem SAN und teils in Form von vernetztem, TPP-haltigen SAN-Perlpolymerisat, Vergleichsbeispiel 2 in Form von vernetztem SAN-Perlpolymerisat und Beispiel 4 teils in Form von vernetztem SAN-Perlpolymerisat und teils in Form von vernetztem, TPP-haltigen SAN-Perlpolymerisat).

Aus den Tabellen 1 und 2 kann entnommen werden, dass durch die Einkapselung des TPPs in eine vernetzte SAN-Matrix
- die Wärmeformbeständigkeit und die Schmelzeviskosität des flammgeschützten Kunststoffs erhöht wird,
- dessen Juicing-Verhalten verbessert, d.h. die Neigung des FR-Additivs zum Ausbluten oder Ausdampfen reduziert wird (geringerer Masseverlust im TGA-Experiment),
- die Spannungsrissbeständigkeit der Formmasse verbessert wird,
- die Kerbschlagzähigkeit der Formmasse unbeeinflusst bleibt und
- eine gute (verbesserte) Flammwidrigkeit erzielt wird.

## Patentansprüche

1. Vernetzte Perlpolymerisate aus olefinisch ungesättigten Verbindungen und Triphenylphosphat als halogenfreie Phosphorverbindung mit einer mittleren Teilchengröße von 1 bis 1000 µm.

2. Vernetzte Perlpolymerisate gemäß Anspruch 1 mit einer mittleren Teilchengröße von 5 - 100 µm.

3. Vernetzte Perpolymerisate nach Anspruch 1 oder 2, aus
A) Copolymerisat aus
a) 70 bis 99,7 Gew.-% monoolefinisch ungesättigten Verbindungen
b) 0,3 bis 30 Gew.-% polyolefinisch ungesättigten Verbindungen, und
B) mindestens einer halogenfreien Phosphorverbindung,
wobei der Gehalt an Phosphorverbindung B) 5 bis 95 Gew.-% bezogen auf das Perlpolymerisat beträgt.

4. Perlpolymerisate nach Anspruch 3, wobei der Gehalt an Phosphorverbindung B) 30 bis 95 Gew.-%, bezogen auf das Perlpolymerisat, beträgt.

5. Verfahren zur Herstellung von Perlpolymerisaten nach einem der Ansprüche 1 bis 4, **dadurch gekennzeichnet, dass** man
I) eine organische Phase aus
- 5 bis 95 Gew.-% eines Monomeren-Gemisches aus
a) 70 bis 99,7 Gew.-% monoolefinisch ungesättigten Verbindungen
b) 0,3 bis 30 Gew.-% polyolefinisch ungesättigten Verbundungen
und
5 bis 95 Gew.-% an mindestens einer halogenfreien Phosphorverbindung,
- mindestens einem Initiator
und
- gegebenenfalls einem mit Wasser wenig oder nicht mischbaren organischen Lösungsmittel,
II) in einer wässrigen Phae aus
- Wasser,
- mindestens einem Dispergiermittel,
- und gegebenenfalls einem Saatpolymer
unter Rühren bei Temperaturen zwischen 0°C und 60°C fein verteilt,
III) dann unter Temperaturerhöhung und unter Rühren polymerisiert und
IV) danach gegebenenfalls enthaltene flüchtige, organische Substanzen abtrennt und das entstandene Perlpolymerisat isoliert, wäscht und trocknet.

6. Verwendung von Perlpolymerisaten nach Anspruch 1 bis 4 als Flammschutzmittel für thermoplastische Formmassen jeglicher Art.

7. Verwendung von Perlpolymerisaten nach Anspruch 1 bis 4 als Flammschutzmittel für thermoplastische Formmassen, die bei Temperaturen >200°C verarbeitet werden.

8. Verwendung von Perlpolymerisaten nach Anspruch 1 bis 4 als Flammschutzmittel für thermoplastische Formmassen enthaltend aromatisches Polycarbonat.

9. Verwendung von Perlpolymerisaten nach Anspruch 1 bis 4 als Flammschutzmittel für schlagzähmodifizierte Polycarbonatformmassen.

10. Zusammensetzungen enthaltend mindestens ein thermoplastisches Polymer und ein Perlpolymerisat gemäß Anspruch 1 bis 4.

11. Zusammensetzung gemäß Anspruch 10 enthaltend mindestens ein thermoplastisches Polymer ausgewählt aus der Gruppe bestehend aus Homo- und Copolymere von olefinisch ungesättigten Monomeren, Polystyrole, Styrol/Acrylnitril-Copolymere, kautschukhaltige (Vinyl-)Pfropfpolymerisate, Vinyl-Chlorid-Homo- und Copolymere, Polyacrylate, Vinylacetat-Copolymere, Polyacetale, Polycarbonate, Polyester, Polyestercarbonate, Polyamide, Polyesteramide, Polyphenylenoxide, Polyphenylensulfide, Polysulfone, Polyethersulfone, Polyetherketone oder Mischungen hieraus.

12. Zusammensetzung gemäß Anspruch 10 oder 11 enthaltend Polymere ausgewählt aus der Gruppe bestehend aus Polycarbonat, Polyester, Polyestercarbonat, Polyamid, Polyesteramid, Polyphenylenoxid, Polyphenylensulfid, Schlagzähmodifikatoren, Vinylpolymere oder Mischungen hieraus.

13. Verwendung der Formmassen gemäß einem der Ansprüche 10 bis 12 zur Herstellung von Formkörpern.

14. Verfahren zur Herstellung von Formkörpern, **dadurch gekennzeichnet, dass** sie aus Perlpolymerisaten nach Anspruch 1 oder aus Zusammensetzungen nach Anspruch 10 erhalten werden.

## Claims

1. Crosslinked bead polymers prepared from olefinically unsaturated compounds and triphenyl phosphate as halogen-free phosphorus compound having an average particle size of 1 to 1000 µm.

2. Crosslinked bead polymers according to claim 1 having an average particle size of 5-100 µm.

3. Crosslinked bead polymers according to claim 1 or 2 prepared from
A) copolymer prepared from
a) 70 to 99.7 wt.% of monoolefinically unsaturated compounds
b) 0.3 to 30 wt.% of polyolefinically unsaturated compounds, and
B) at least one halogen-free phosphorus compound,
wherein the content of phosphorus compound B) is 5 to 95 wt.%, relative to the bead polymer.

4. Bead polymers according to claim 3, wherein the content of phosphorus compound B) is 30 to 95 wt.%, relative to the bead polymer.

5. Process for the production of bead polymers according to one of claims 1 to 4, **characterised in that**
I) an organic phase prepared from
- 5 to 95 wt.% of a monomer mixture prepared from
a) 70 to 99.7 wt.% of monoolefinically unsaturated compounds
b) 0.3 to 30 wt.% of polyolefinically unsaturated compounds
and
5 to 95 wt.% of at least one halogen-free phosphorus compound,
- at least one initiator,
and
- optionally an organic solvent sparingly miscible or immiscible with water,
is finely dispersed
II) in an aqueous phase prepared from
- water,
- at least one dispersant,
- and optionally a seed polymer with stirring at temperatures of between 0°C and 60°C,
III) then polymerisation is performed with an increase in temperature and with stirring and
IV) subsequently any optionally present volatile, organic substances are separated and the resultant bead polymer is isolated, washed and dried.

6. Use of bead polymers according to any of claims 1 to 4 as a flame retardant for thermoplastic moulding compositions of any kind.

7. Use of bead polymers according to any of claims 1 to 4 as a flame retardant for thermoplastic moulding compositions which are processed at temperatures of >200°C.

8. Use of bead polymers according to any of claims 1 to 4 as a flame retardant for thermoplastic moulding compositions containing aromatic polycarbonate.

9. Use of bead polymers according to any of claims 1 to 4 as a flame retardant for impact-modified polycarbonate moulding compositions.

10. Compositions containing at least one thermoplastic polymer and one bead polymer according to any of claims 1 to 4.

11. Composition according to claim 10 containing at least one thermoplastic polymer selected from the group consisting of homo- and copolymers of olefinically unsaturated monomers, polystyrenes, styrene/acrylonitrile copolymers, (vinyl) graft polymers containing rubber, vinyl chloride homo- and copolymers, polyacrylates, vinyl acetate copolymers, polyacetals, polycarbonates, polyesters, polyester carbonates, polyamides, polyester amides, polyphenylene oxides, polyphenylene sulfides, polysulfones, polyether sulfones, polyether ketones or mixtures thereof.

12. Composition according to claim 10 or 11 containing polymers selected from the group consisting of polycarbonate, polyester, polyester carbonate, polyamide, polyester amide, polyphenylene oxide, polyphenylene sulfide, impact-modifiers, vinyl polymers or mixtures thereof.

13. Use of the moulding compositions according to one of claims 10 to 12 for the production of mouldings.

14. Process for the production of mouldings, **characterised in that** they are obtained from bead polymers according to claim 1, or from compositions according to claim 10.

## Revendications

1. Polymères en perles réticulés de composés oléfiniquement insaturés et de phosphate de triphényle, comme composé phosphoré exempt d'halogène, avec une taille moyenne des particules allant de 1 à 1000 µm.

2. Polymères en perles réticulés suivant la revendication 1, avec une taille moyenne des particules allant de 5 à 100 µm.

3. Polymères en perles réticulés suivant la revendication 1 ou 2, constitués de
A) un copolymère de
a) 70 à 99,7% en poids de composés monooléfiniquement insaturés,
b) 0,3 à 30% en poids de composés polyoléfiniquement insaturés, et
B) au moins un composé du phosphore exempt d'halogène,
où la teneur en composé du phosphore B) se situe dans l'intervalle allant de 5 à 95% en poids, sur base du polymère en perles.

4. Polymères en perles réticulés suivant la revendication 3, où la teneur en composé du phosphore B) se situe dans l'intervalle allant de 30 à 95% en poids, sur base du polymère en perles.

5. Procédé de préparation de polymères en perles suivant l'une des revendications 1 à 4, **caractérisé en ce que**
I) on distribue finement une phase organique, constituée de :
- 5 à 95% en poids d'un mélange de monomères, de
a) 70 à 99,7% en poids de composés monooléfiniquement insaturés,
b) 0,3 à 30% en poids de composés polyoléfiniquement insaturés, et
- 5 à 95% en poids d'un composé phosphoré exempt d'halogène,
- au moins un initiateur, et
- le cas échéant, un solvant organique peu ou non miscible à l'eau,
II) dans une phase aqueuse, constituée de :
- eau,
- au moins un agent de dispersion, et
- le cas échéant, un polymère d'encemensement,
sous agitation à des températures allant de 0°C à 60°C,
III) on polymérise avec augmentation de la température et sous agitation, et
IV) ensuite, on sépare les substances organiques volatiles le cas échéant présentes et on isole le polymère en perles formé, on lave et on sèche.

6. Utilisation de polymères en perles suivant les revendications 1 à 4, comme agent de protection contre les flammes pour matières à mouler thermoplastiques de tout type.

7. Utilisation de polymères en perles suivant les revendications 1 à 4, comme agent de protection contre les flammes pour matières à mouler thermoplastiques, qui sont usinées à des températures > 200°C.

8. Utilisation de polymères en perles suivant les revendications 1 à 4, comme agent de protection contre les flammes pour matières à mouler thermoplastiques contenant un polycarbonate aromatique.

9. Utilisation de polymères en perles suivant les revendications 1 à 4, comme agent de protection contre les flammes pour matières à mouler en polycarbonate, modifiées pour la résilience.

10. Compositions contenant au moins un polymère thermoplastique et un polymère en perles suivant les revendications 1 à 4.

11. Composition suivant la revendication 10, contenant au moins un polymère thermoplastique, choisi parmi le groupe consistant en les homo- et copolymères de monomères oléfiniquement insaturés, les polystyrènes, les copolymères styrène/acrylonitrile, les polymères greffés (vinyliques) contenant du caoutchouc, les homo- et copolymères de chlorure de vinyle, les polyacrylates, les copolymères d'acétate de vinyle, les polyacétals, les polycarbonates, les polyesters, les polyester-carbonates, les polyamides, les polyester-amides, les poly(oxydes de phénylène), les poly(sulfures de phénylène), les polysulfones, les polyéthersulfones, les polyéthercétones ou leurs mélanges.

12. Composition suivant la revendication 10 ou 11, contenant des polymères choisis parmi le groupe consistant en les polycarbonates, les polyesters, les polyester-carbonates, les polyamides, les polyester-amides, les poly(oxydes de phénylène), les poly(sulfures de phénylène), les modificateurs de résilience, les polymères vinyliques et leurs mélanges.

13. Utilisation des matières à mouler suivant l'une des revendications 10 à 12, pour la préparation d'articles moulés.

14. Procédé de préparation d'articles moulés, **caractérisé en ce qu'**ils sont obtenus à partir des polymères en perles suivant la revendication 1 ou des compositions suivant la revendication 10.
